(19) Europäisches Patentamt
European Patent Office
Office européen des brevets

(11) Veröffentlichungsnummer: **0 498 903 A1**

(12) **EUROPÄISCHE PATENTANMELDUNG**

(21) Anmeldenummer: **91101887.7**

(51) Int. Cl.[5]: **G05B 19/18**

(22) Anmeldetag: **11.02.91**

(43) Veröffentlichungstag der Anmeldung:
**19.08.92 Patentblatt 92/34**

(84) Benannte Vertragsstaaten:
**CH DE FR IT LI NL SE**

(71) Anmelder: **SIEMENS AKTIENGESELLSCHAFT**
**Wittelsbacherplatz 2**
**W-8000 München 2(DE)**

(72) Erfinder: **Olomski, Jürgen, Dr. Ing.**
**V.-Andechs.-Weg 24**
**W-8522 Herzogenaurach(DE)**

(54) **Verfahren zur Elastizitätskompensation zwischen einem Antriebs- und einem Abtriebssystem.**

(57) Die Konturgenauigkeit von Positioniersystemen, die ein Antriebs- (A,M) und Abtriebssystem (L) aufweisen, wird auch von der zwischen Motor (M) und Last (L) wirkenden Elastizität (F) beeinflußt. Ein dadurch auftretender Konturfehler läßt sich aus der Elastizitätskonstante ($K_F$), dem Massenträgheitsmoment der Last ($J_L$) und der Winkelbeschleunigung (dw/dt) regelungstechnisch bestimmen und kompensierend auf eine Regelstrecke aufschalten. Das durch die Gravitation bedingte Drehmoment kann ebenfalls vorsteuernd kompensiert werden.

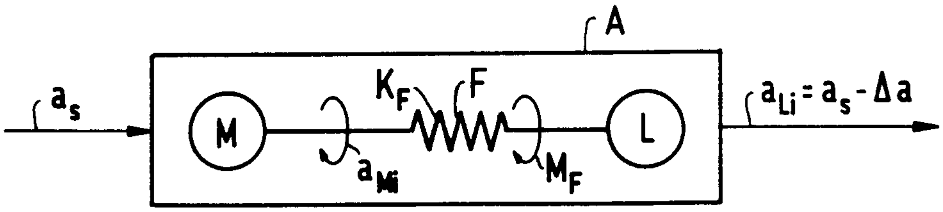


FIG 1

EP 0 498 903 A1

Die Kopplung zwischen einem beliebigen Antriebs- und Abtriebssystem ist in der Praxis nicht ideal. So kann beispielsweise ein konstruktionsbedingtes oder durch Fertigungstoleranzen verursachtes Spiel zwischen Antriebs- und Abtriebssystem auftreten, das bei einem für die Positionierung bestimmten Antriebssystem zu einer Fehlpositionierung führt. Dieser Mangel kann jedoch durch eine verbesserte Konstruktion und eine Erhöhung der Fertigungsgenauigkeit weitgehend beseitigt werden.

Es zeigt sich aber, daß selbst bei hochgenau gefertigten Antriebssystemen, wie sie beispielsweise für Werkzeugmaschinen und Roboter verwendet werden, noch Positionierfehler auftreten, die auf die Elastizität zwischen dem Antriebs- und Abtriebssystem zurückzuführen sind. Diese Fehler können von einer Regelung nicht erkannt und somit nicht korrigiert werden, wenn für die Regelung der Lageistwert des Antriebs verwendet wird, was üblicherweise der Fall ist. Die Genauigkeit der Positionierung des Abtriebs von auf den Antrieb geregelten Antriebssystemen könnte also durch die Berücksichtigung dieser Elastizitätskomponente noch verbessert werden.

Es ist Aufgabe der vorliegenden Erfindung, ein Verfahren und eine Einrichtung zur Regelung eines Antriebssystems zu schaffen, bei dem die Elastizität zwischen Antriebs- und Abtriebssystem kompensiert wird.

Gemäß der Erfindung wird diese Aufgabe durch ein Verfahren zur Elastizitätskompensation zwischen einem Antriebs- und einem Abtriebssystem gelöst, wobei

a) ein Korrektursollwert aus der Elastizitätskonstante zwischen Antriebssystem und Abtriebssystem und dem auf das Abtriebssystem zu übertragenden Drehmoment gebildet wird, der der Differenz zwischen Antriebssollwert und Antriebsistwert entspricht,

b) aus dem Korrektursollwert und dem Antriebssollwert ein korrigierter Antriebssollwert gebildet wird, mit dem ein Antriebssystem ansteuerbar ist.

Nach vorteilhaften Ausführungen des Verfahrens läßt sich das Drehmoment aus dem Massenträgheitsmoment, dem Gravitationsmoment oder beiden bestimmen. Es können aber jederzeit auch weitere zusätzliche Drehmomente berücksichtigt werden.

Nach einer weiteren vorteilhaften Ausführungsform des Verfahrens wird die Regelstrecke eines Antriebssystems mit einer sogenannten Drehzahl- und Drehmomentvorsteuerung, die allgemein nur mit Drehmomentvorsteuerung bezeichnet wird, betrieben. Mit einer solchen Drehmomentvorsteuerung kann das dynamische Verhalten des Regelkreises erheblich verbessert werden. Zusammen mit der Elastizitätskompensation läßt sich somit eine optimierte Antriebsregelung erreichen, wobei ein besonderer Vorteil noch darin liegt, daß sich der Korrektursollwert direkt aus dem Ausgangssignal der Drehmomentvorsteuerung ableiten läßt.

Im Sinne der vorliegenden Erfindung wird der Begriff "Antriebssystem" in einer allgemeinen und einer besonderen Bedeutung verwendet. Unter der allgemeinen Bedeutung des Begriffs ist ein System zu verstehen, das aus einem Aktuator, z.B. einem Elektromotor, aus Koppelelementen und der angetriebenen Last besteht und das Mittel zur Regelung und/oder Steuerung aufweisen kann. Unter der besonderen Bedeutung des Begriffs ist der Aktuator sowie alle Mittel zu dessen Antrieb zu verstehen. Die jeweilige Bedeutung des Begriffs ergibt sich aus dem Kontext.

Eine Einrichtung zur Durchführung des Verfahrens ist Gegenstand der weiteren Ansprüche. Sie ist in der Zeichnung anhand von Blockschaltbildern näher dargestellt, mit denen ein Ausführungsbeispiel der Erfindung im folgenden näher erläutert werden soll. In der Zeichnung zeigen:

Fig. 1 ein physikalisches Modell eines Antriebs- und Abtriebssystems, Fig. 2 ein Blockschaltbild zur Bildung eines korrigierten Antriebssollwertes, Fig. 3 und 4 ein Blockschaltbild einer Antriebsregelung mit Drehmomentvorsteuerung und Elastizitätskompensation.

Fig. 1 zeigt das physikalische Modell eines elastischen Antriebs- und Abtriebssystems, wobei das Antriebssystem durch einen auf die Motorlage $a_{Mi}$ geregelten Motor M, das Abtriebssystem L durch die vom Motor M angetriebene Last L und die Elastizität zwischen dem Antriebs- und Abtriebssystem durch eine Feder F mit der Federkonstanten $K_F$ dargestellt ist. Das physikalische Modell befindet sich in einem rechteckigen Block, der als regelungstechnisches Ersatzschaltbild für ein allgemeines Antriebssystem A aufgefaßt werden kann. Wird beispielsweise bei einer numerisch gesteuerten oder geregelten Maschine das Antriebssystem A mit einem Lagesollwert $a_s$ beaufschlagt, so wird dieses mit einem abtriebsseitigen Lageistwert $a_{Li}$ reagieren. Bei einem im übrigen idealen und auf den Antrieb geregelten System wird der Lageistwert $a_{Li}$ vom Lagesollwert $a_s$ aufgrund der Elastizität zwischen Antriebs- und Abtriebssystem, die durch die Feder F symbolisiert ist, abweichen.

Wenn einem Regelkreis eines numerisch gesteuerten Antriebssystems ein Antriebssollwert als Lagesollwert $a_s$ zugeführt wird, so läßt sich die Lageabweichung delta a aus dem Drehmoment der Feder $M_F$ und der Federkonstante $K_F$ nach Gleichung 1 berechnen

delta a = $M_F/K_F$.    (1)

Das Drehmoment $M_F$, das auf die Feder F einwirkt, kann sich aus verschiedenen einzelnen Drehmomenten, beispielsweise aus dem Gravitationsmoment $M_G$, dem Beschleunigungsmoment $M_B$, dem Reibungsmoment und weiteren zusätzlichen Drehmomenten $M_{zus}$ zusammensetzen. Alle diese Momente können mit dem Verfahren zur Elastizitätskompensation berücksichtigt werden. Der Einfachheit halber wird sich im folgenden zur Herleitung der mathematischen Beziehungen jedoch lediglich auf das Beschleunigungsmoment, welches auf die Last einwirkt, beschränkt.

Wenn also keine weiteren Drehmomente berücksichtigt werden, ist das Beschleunigungsmoment gleich dem Federmoment

$M_F = M_B$    (2)

Unter diesen Voraussetzungen ergibt sich das Beschleunigungsmoment und damit das Drehmoment der Feder aus dem Trägheitsmoment der Last $J_L$ multipliziert mit der Winkelbeschleunigung der Last $dw_L/dt$. Da die Winkelbeschleunigung der Last jedoch nicht bekannt ist, kann diese genähert werden durch die Sollwinkelbeschleunigung $dw_s/dt$.

$M_F = M_B = J_L \cdot dw_S/dt$    (3)

Das Trägheitsmoment der Last $J_L$ sowie die Federkonstante $K_F$ lassen sich in einer dem Fachmann bekannten Weise meßtechnisch bestimmen oder den Herstellerangaben zu einem herkömmlichen Antriebssystems entnehmen. Damit sind alle Größen zur Bestimmung der Lageabweichung bzw. des Korrektursollwerts delta a bekannt. Ersetzt man in Gleichung (1) das Federmoment $M_F$ durch Gleichung (3), so erhält man:

$$\text{delta a} = J_L/K_F \cdot \frac{dw_s}{dt} \qquad (4)$$

Dieser mathematische Zusammenhang läßt sich regelungstechnisch durch ein Blockschaltbild gemäß Fig. 2 beschreiben.

Fig. 2 zeigt ein Blockschaltbild zur Bildung des Korrektursollwerts delta a. Es weist zwei Differenzierglieder D1, D2 und ein Proportionalglied P auf. Auf den Eingang des ersten Differenzierglieds D1 wird der Lagesollwert $a_s$ gegeben. Nach zweimaliger Differentiation erhält man am Ausgang des Differenziergliedes D2 die Winkelbeschleunigung $\dot{w} = dw/dt$. Die Winkelbeschleunigung $\dot{w}$ wird nun mittels des Proportionalgliedes P noch mit einem Faktor, der sich aus der Division des Trägheitsmomentes der Last $J_L$ durch die Federkonstante $K_F$ ergibt, multipliziert. Damit erhält man am Ausgang des Proportionalgliedes P den Korrektursollwert delta a. Der Korrektursollwert delta a wird nun direkt zu dem an der Steuerstrecke vorbeigeschleiften Lagesollwert $a_s$ addiert, so daß am Ausgang des Addierers der korrigierte Lagesollwert $\bar{a}_s$ entsteht. Der korrigierte Antriebssollwert $\bar{a}_s$ kann nun auf eine beliebige Regelstrecke eines Antriebssystems mit entsprechendem Massenträgheitsmoment $J_L$ und entsprechender Federkonstante $K_F$ elastizitätskompensierend aufgeschaltet werden.

Fig. 3 zeigt eine solche Regelstrecke, auf die ein korrigierter Antriebssollwert als Lagesollwert $\bar{a}_s$ aufgeschaltet wird. Die Hauptbestandteile der Regelstrecke sind ein Lageregler LR sowie ein Drehzahlregler DR, der als PI-Regelglied ausgebildet ist und eine Antriebseinheit A, der ein Drehmomentsollwert $M_S'$ zugeführt wird und die beispielsweise über einen Leistungsteil verfügt, über den der Drehmomentsollwert $M_s$ zum Antrieb eines Motors und einer mit diesem verbundenen Last umgesetzt wird. Das Leistungsteil, der Motor und die Last sind nicht gesondert dargestellt, zwischen Motor und Last wirkt jedoch, wie anhand von Fig. 1 beschrieben, eine Elastizität, die durch die Federkonstante $K_F$ beschrieben werden kann. Die Last (incl. alle zum Abtriebssystem gehörenden Teile) wird durch ihr Massenträgheitsmoment $J_L$ repräsentiert. Vom Antriebssystem A wird der motorseitige Antriebsistwert $a_{Mi}$ sowie der motorseitige Drehzahlistwert $W_{Mi}$ zur Regelung an den Lageregler LR bzw. Drehzahlregler DR zurückgeführt.

Neben der bereits aus Fig. 2 bekannten Steuerstrecke aus den beiden Differenziergliedern D1, D2 und dem Proportionalregler P, die zur Bildung des korrigierten Lagesollwerts delta a dient, weist die Fig. 3 noch zwei weitere Differenzierglieder D3 und D4 auf. Diese Differenzierglieder D3, D4 dienen zur Drehzahl- bzw.

Drehmomentvorsteuerung.

Zur Drehzahlvorsteuerung wird der durch das Differenzierglied D3 einmal differenzierte Lagesollwert $a_s$ als Solldrehzahl $w_s$ zum Ausgangssignal des Lagereglers LR addiert. Zur Drehmomentvorsteuerung wird der durch die Differenzierglieder D3, D4 zweimal differenzierte Lagesollwert $a_s$ über ein Proportionalglied $P_M$ zum Ausgang des Drehzahlreglers DR addiert. Weitere Drehmomentanteile, wie Reibungs- oder Gravitationsmoment, können als $M_{zus}$ hinzuaddiert werden. Durch dieses direkte Aufschalten des Drehzahl- bzw. Drehmomentsollwertes $M_s$ wird eine hohe Dynamik des Anlaufverhaltens des Motors erreicht und dadurch der bei Regelstrecken auftretende Schleppabstand weitgehend minimiert. Je geringer jedoch der Schleppabstand wird, umso stärker fällt der durch die Elastizität F bedingte Positionsfehler ins Gewicht. Durch die Bildung des Korrektursollwertes delta a und die Aufschaltung des korrigierten Lagesollwertes $\overline{a}_s$ auf die Regelstrecke kann mit der gegebenen Konfiguration dieser Elastizitätsfehler kompensiert werden.

Im Blockschaltbild der Fig. 3 fällt auf, daß jeweils zwei Differenzierglieder D1, D2 bzw. D3, D4 dasselbe Ausgangssignal liefern. Aus dieser Tatsache läßt sich eine weitere vorteilhafte Ausbildung der Erfindung ableiten, die anhand von Fig. 4 beschrieben werden soll.

Fig. 4 zeigt ein Blockschaltbild einer Einrichtung zur Elastizitätskompensation zwischen einem Antriebs- und einem Abtriebssystem, dessen wesentliche Elemente bereits aus Fig. 3 bekannt sind. Im Unterschied zu Fig. 3 enthält Fig. 4 ein zusätzliches Proportionalglied (PG), es fehlen jedoch die beiden Differenzierglieder D1 und D2. Da, wie bereits erwähnt, am Ausgang des Differenziergliedes D4 in Fig. 4 dasselbe Signal vorliegt, wie am Ausgang des Differenziergliedes D2 in Fig. 3 vorlag, kann der Korrektursollwert delta a auch vom Ausgang des Differenziergliedes D4 abgeleitet werden, wenn dessen Ausgangssignal über das Proportionalglied P mit dem Quotienten aus Massenträgheitsmoment $J_L$ und der Federkonstante $K_F$ multipliziert wird. Diese Ausführung der Erfindung ermöglicht eine besonders einfache Realisierung der Elastizitätskompensation, wenn eine Drehzahl- und Drehmomentvorsteuerung vorgesehen oder bereits vorhanden ist.

Wenn man von der Fehlpositionierung, die durch die Trägheit des Abtriebssystems L hervorgerufen wird, absieht, so verbleibt neben anderen Drehmomenten $M_{zus}$ noch das Gravitationsmoment $^MG$ als Ursache für eine elastizitätsbedingte Fehlpositionierung. Dieser Einfluß der Gravitation läßt sich ebenfalls vorsteuernd kompensieren, indem über das Proportionalglied PG ein Korrektursollwert delta $a_G$ erzeugt wird. Das Gravitationsmoment kann dabei nach den dem Fachmann bekannten Verfahren bestimmt werden.

Es ist jedoch besonders vorteilhaft, sowohl die durch die Gravitation als auch die durch die Trägheit bedingte Fehlpositionierung dadurch zu kompensieren, daß der gravitationsabhängige Lagekorrekturwert delta $a_G$ und der trägheitsabhängige Lagekorrekturwert delta $a_G$, wie in Fig. 4 gezeigt, vorsteuernd auf die Regelstrecke aufgeschaltet werden.

## Patentansprüche

**1.** Verfahren zur Elastizitätskompensation zwischen einem Antriebs- (A,M) und einem Abtriebssystem (L), wobei

a) ein Korrektursollwert (delta a) aus der Elastizitätskonstante ($K_F$) zwischen Antriebssystem (A,M) und Abtriebssystem (L) und dem auf das Abtriebssystem (L) zu übertragenden Drehmoment ($M_F$) gebildet wird, der der Differenz zwischen Antriebssollwert ($a_s$) und Antriebsistwert ($a_{Li}$) entspricht,

b) aus dem Korrektursollwert (delta $a_s$) und dem Antriebssollwert ($a_s$) ein korrigierter Antriebssollwert ($\overline{a_s}$) gebildet wird, mit dem ein Antriebssystem (A,M) ansteuerbar ist.

**2.** Verfahren nach Anspruch 1, wobei das auf das Abtriebssystem (L) zu übertragende Drehmoment ($M_F$) aus dem Massenträgheitsmoment ($J_L$) des Abtriebssystems (L) und der Winkelbeschleunigung (dw/dt) gebildet wird.

**3.** Verfahren nach Anspruch 1, wobei das auf das Abtriebssystem (L) zu übertragende Drehmoment ($M_F$) aus dem Gravitationsmoment ($M_G$), das auf das Abtriebssystem (L) wirkt, gebildet wird.

**4.** Verfahren nach Anspruch 1, wobei das auf das Abtriebssystem (L) zu übertragende Drehmoment ($M_F$) aus dem Massenträgheitsmoment ($J_L$) und der Winkelbeschleunigung

$$\left(\frac{d\ w}{dt}\right)$$

und dem Gravitationsmoment ($M_G$) gebildet wird.

**5.** Verfahren nach einem der vorstehenden Ansprüche, wobei

a) der korrigierte Antriebssollwert ($\bar{a}_s$) als Lagesollwert einer Regelstrecke, die einen Lage- (LR) und einen Drehzahlregler (DR) aufweist, zugeführt wird,

b) der einmal differenzierte Lagesollwert ($da_s/dt$) zum Ausgangssignal des Lagereglers (LR) und der zweimal differenzierte Antriebssollwert ($d^2a_s/dt^2$) über ein Proportionalglied (PM) zum Ausgangssignal des Drehzahlreglers (DR) addiert wird,

c) das Antriebssystem (A, M) mit der Summe aus dem Ausgangssignal des Proportionalgliedes (PM) und dem Ausgang des Drehzahlreglers (DR) beaufschlagt wird.

**6.** Verfahren nach Anspruch 1, 2, 4 oder 5, wobei der Korrektursollwert (delta a) aus dem zweimal differenzierten Lagesollwert ($d^2a_s/dt^2$) bestimmt wird.

**7.** Einrichtung zur Elastizitätskompensation zwischen einem Antriebs- (A,M) und einem Abtriebssystem (L), wobei

a) Mittel zur Bildung eines Korrektursollwertes (delta a) aus einem Antriebssollwert ($a_s$) vorgesehen sind, wobei der Korrektursollwert (delta a) der Differenz zwischen Antriebssollwert ($a_s$) und Antriebsistwert ($a_{Mi}$) entspricht,

b) der Korrektursollwert (delta $a_s$) aus der Elastizitätskonstante ($K_F$) zwischen Antriebssystem (A,M) und Abtriebssystem (L) und dem auf das Abtriebssystem (L) zu übertragenden Drehmoment ($M_F$) bestimmt wird,

c) Mittel zur Bildung eines korrigierten Antriebssollwertes ($\bar{a}_s$) aus dem Korrektursollwert (delta a) und dem Antriebssollwert ($a_s$) zur Ansteuerung eines Antriebssystems vorgesehen sind.

**8.** Einrichtung nach Anspruch 7, wobei Mittel zur Bestimmung des auf das Abtriebssystem (L) zu übertragenden Drehmoments ($M_F$) aus dem Massenträgheitsmoment ($J_L$) des Abtriebssystems (L) und der Winkelbeschleunigung (dw/dt) vorgesehen sind.

**9.** Einrichtung nach Anspruch 7, wobei Mittel zur Bestimmung des auf das Abtriebssystem (L) zu übertragenden Drehmoments ($M_F$) aus dem Gravitationsmoment ($M_G$), das auf das Abtriebssystem (L) wirkt, vorgesehen sind.

**10.** Einrichtung nach Anspruch 7, wobei Mittel zur Bestimmung des auf das Abtriebssystem (L) zu übertragenden Drehmoments ($M_F$) aus dem Massenträgheitsmoment ($J_L$) des Abtriebssystems (L) und dem Gravitationsmoment ($M_G$) vorgesehen sind.

**11.** Einrichtung nach den Ansprüchen 7, 8, 9 oder 10, wobei

a) eine Regelstrecke vorgesehen ist, die einen Lage- (LR) und einen Drehzahlregler (DR) aufweist, wobei der Regelstrecke der korrigierte Antriebssollwert ($\bar{a}_s$) als Lagesollwert ($\bar{a}_s$) zuführbar ist,

b) Mittel zur Aufschaltung des einmal differenzierten Lagesollwerts ($da_s/dt$) auf das Ausgangssignal des Lagereglers (LR) und des zweimal differenzierten, über ein Proportionalglied (PM) geführten, Antriebssollwerts ($d^2a_s/dt^2$) auf das Ausgangssignal des Drehzahlreglers (DR) vorgesehen sind.

c) Mittel (V3) zur Bildung der Summe der Ausgangssignale des Proportionalglieds (PM) und des Drehzahlreglers (DR) und zur Aufschaltung dieser Summe auf das Antriebssystem (A,M).

**12.** Einrichtung nach Anspruch 7, 8, 10 oder 11, wobei Mittel zur Bildung des Korrektursollwerts (delta $a_s$) aus dem zweimal differenzierten Lagesollwert ($d^2a_s/dt^2$) vorgesehen sind.

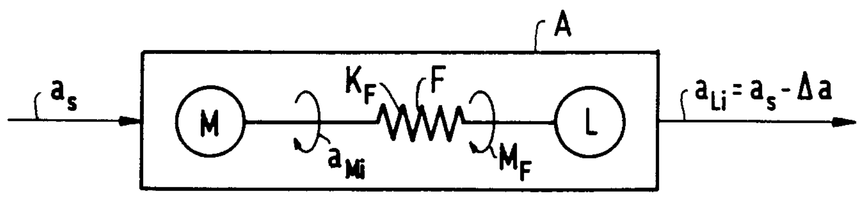


FIG 1

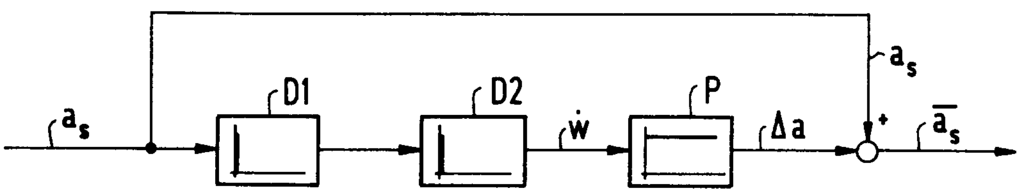


FIG 2

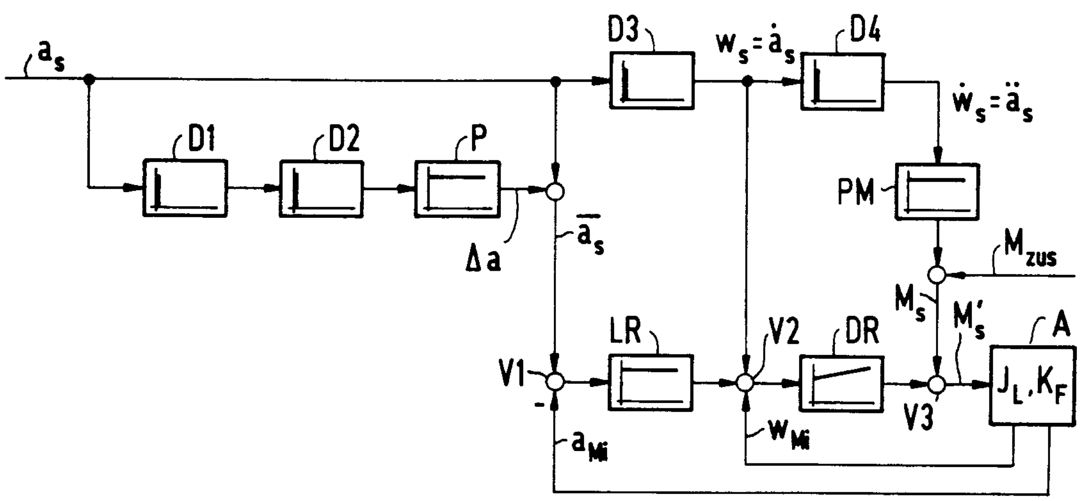


FIG 3

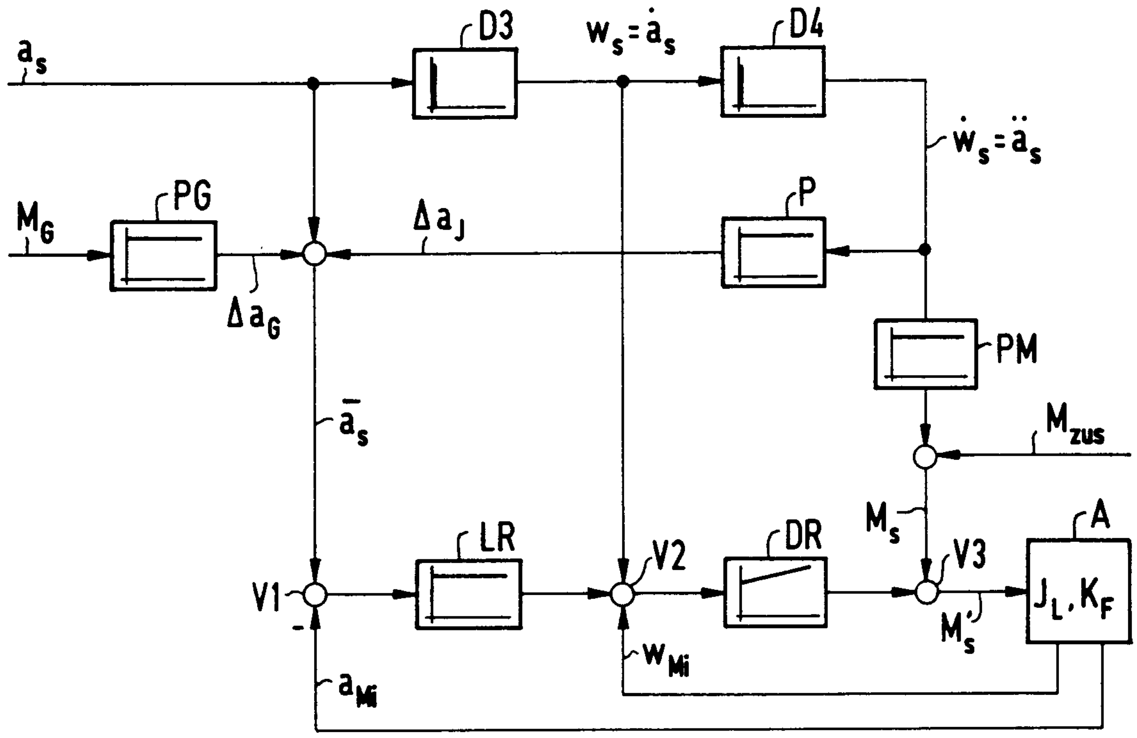

$a_s$
D3
$w_s = \dot{a}_s$
D4
$\dot{w}_s = \ddot{a}_s$
$M_G$
PG
$\Delta a_J$
P
$\Delta a_G$
PM
$\bar{a}_s$
$M_{zus}$
$M_s$
A
LR
DR
V2
V3
V1
-
$J_L, K_F$
$M_s'$
$w_{Mi}$
$a_{Mi}$


FIG 4

Europäisches Patentamt

# EUROPÄISCHER RECHERCHENBERICHT

Nummer der Anmeldung

EP 91 10 1887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | AUTOMATISIERUNGSTECHNIK - AT. Bd. 37, Nr. 1, Januar 1989, MUNCHEN DE Seiten 23 - 31; G. BRANDENBURG: 'Einfluss and Kompensation von Lose und Coulombscher Reibung bei einem drehzahl- und lagegeregelten, elastischen Zweimassensystem' * das ganze Dokument * | 1,7 | G05B19/18 |
| A | TRANSACTIONS OF THE INSTITUTE OF MEASUREMENT AND CONTROL. Bd. 11, Nr. 5, Oktober 1989, LONDON GB Seiten 225 - 230; R. FIROOZIAN: 'Active position control of stepping motors with flexible transmission shaft.' * das ganze Dokument * | 1-12 | |
| A | DE-A-3 635 442 (TOSHIBA MACHINE CO. LTD.) * das ganze Dokument * | 1-12 | |

RECHERCHIERTE SACHGEBIETE (Int. Cl.5)

G05B

Der vorliegende Recherchenbericht wurde für alle Patentansprüche erstellt

| Recherchenort | Abschlußdatum der Recherche | Prüfer |
|---|---|---|
| DEN HAAG | 29 OKTOBER 1991 | J.P. Ressenaar |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)